# EUROPEAN PATENT SPECIFICATION

(11) **EP 1 625 305 B1**
(45) Date of publication and mention of the grant of the patent: **11.07.2007**
(21) Application number: 03727973.4
(22) Date of filing: 22.05.2003
(51) Int. Cl.: F04D 29/26, H02K 15/00

(54) **METHOD FOR ASSEMBLING A FAN TO AN ELECTRIC MOTOR AND MOTOR-FAN ASSEMBLY OBTAINED BY SUCH A METHOD**
VERFAHREN ZUM ZUSAMMENBAU EINES LÜFTERS AN EINEM ELEKTRISCHEN MOTOR UND DADURCH ERHALTENE MOTORLÜFTERZUSAMMENBAU
PROCEDE PERMETTANT DE MONTER UN VENTILATEUR SUR UN MOTEUR ELECTRIQUE ET ENSEMBLE MOTEUR-VENTILATEUR OBTENU AU MOYEN DE CE PROCEDE

(43) Date of publication of application: 15.02.2006
(73) Proprietor: Giordano Riello International Group S.p.A., 37040 Bevilacqua VR (IT)
(72) Inventor: RIELLO, Valerio, Giordano, I-37040 Bevilacqua VR (IT)
(74) Representative: Perani, Aurelio
(86) International application number: PCT/IT2003/000311
(87) International publication number: WO 2004/104425

(56) References cited:
- EP-A- 0 837 244
- EP-A- 1 008 776
- WO-A-99/67535
- US-B1- 6 205 644
- PATENT ABSTRACTS OF JAPAN vol. 1999, no. 04, 30 April 1999 (1999-04-30) & JP 11 018351 A (MITSUBISHI ELECTRIC CORP), 22 January 1999 (1999-01-22)
- PATENT ABSTRACTS OF JAPAN vol. 1999, no. 04, 30 April 1999 (1999-04-30) & JP 11 013698 A (MITSUBISHI ELECTRIC CORP), 19 January 1999 (1999-01-19)

## Description

This invention relates to a method for assembling the rotor of a fan onto the shaft of an electric motor according to the preamble of claim 1 and a motor/fan unit obtained through the said method. Such a motor is disclosed for example in WO-A-99/67535.

More particularly, this invention relates to a method for mounting the rotor of a fan on the shaft of an electric motor to produce motor/fan units for air conditioning equipment such as, for example, fan/convector systems.

Methods for mounting a rotor with an electric motor in which the fan rotor is fixed to the drive shaft of the electric motor are known.

In the situation where the fitting operation is carried out by a human operator, the latter must fix the rotor to the drive shaft of the electric motor and check the final position of the fan with respect to the electric motor.

The rotor is typically secured to the drive shaft using bolts, steel springs or other similar means which have the effect of disturbing the symmetry of the mass involved, resulting in poor dynamic balancing of the motor/rotor unit.

If such operations have to be carried out in an automated assembly line, a plurality of reference points have to be provided to identify the spatial position of the mechanical manipulator with respect to the motor and of the motor with respect to the rotor and/or vice versa. In fact, when the mechanical manipulator or robot picks up the rotor from the pallet or the component storage point it is "blind" with respect to the current position of the motor.

In order for the anthropomorphic robot to be able to recognise the position of the rotor in space with respect to the motor, or the motor shaft, a number of position sensors, encoders, photocells and the like have to be provided. In this way it is possible to define a set of operations which the robot must perform for correct assembly of the rotor on the motor shaft.

However this solution has the disadvantage, that it needs an appreciable number of sensors, and this has an adverse effect on the automatic control system, which becomes complex and unstable.

The need for a method which makes it possible to reduce the use of position sensors has therefore been greatly felt.

The technical problem underlying this invention is that of providing a method for mounting a rotor on an electric motor in such a way as to satisfy the abovementioned requirement.

This problem is resolved by the method of assembly according to claim 1.

Other advantages and characteristics of the present invention will become clear from the following detailed description which is given with reference to the appended drawings which are provided purely by way of non-limiting example and in which:
Figure 1 shows one application of the method according to this invention.
Figure 2 shows a detail of Figure 1,

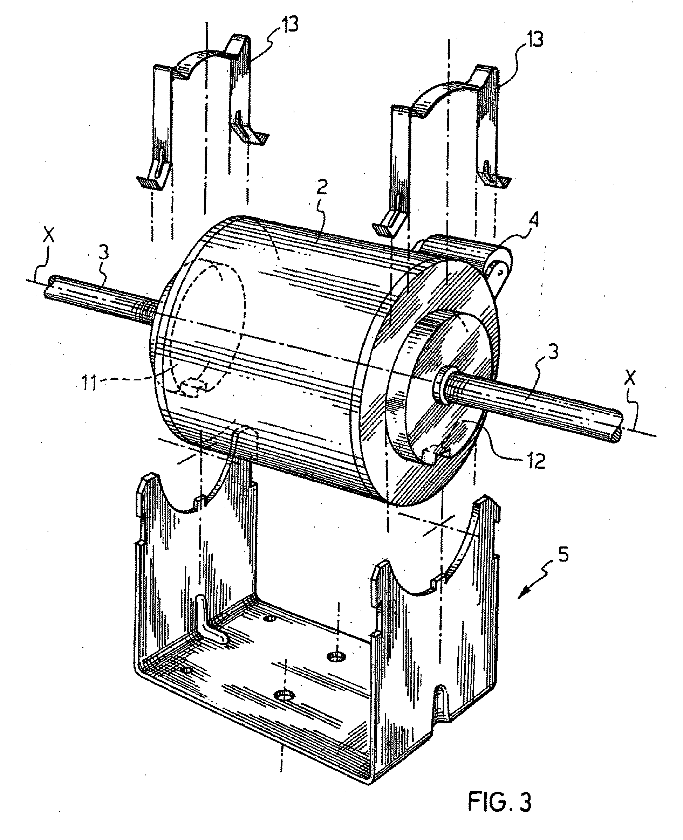

Figure 3 shows a perspective view of an electric motor ready to be assembled with a fan rotor through the method according to this invention.

With reference to the abovementioned figures, 1 generically indicates an electric motor which has to be assembled with the rotor 20 of a fan (not shown in the figures) through the method according to this invention.

Like a normal electric motor of the conventional type, electric motor 1 comprises a loadbearing structure 2 supporting a stator element (not shown in the figure) and a drive shaft 3 to which a rotor (not shown in the figure) is connected.

Electric motor 1 also comprises an electrical condenser 4 which acts as a starter during the stage of starting up electric motor 1.

Typically electrical condenser 4 is mounted on the outer part of the loadbearing structure 2 of electric motor 1.

The example which follows relates to an electric motor 1 for fan/convector equipment in which the electric motor is capable of driving a pair of fans, each of which have one rotor.

For this purpose drive shaft 3 projects from both the head ends of electric motor 1 along a longitudinal axis of rotation (X-X) so as to receive one rotor on each side.

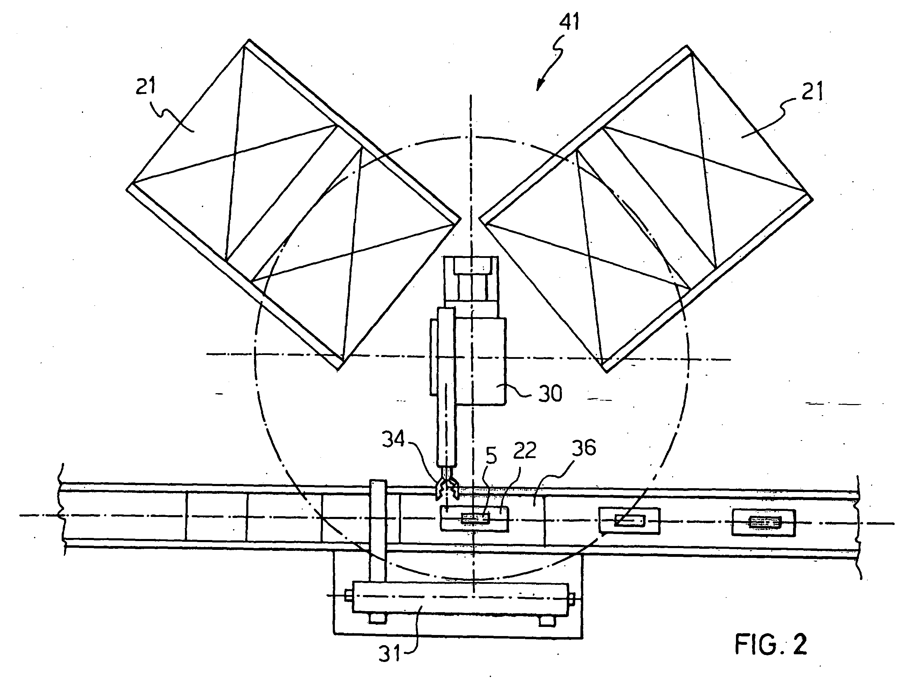

Typically, electric motor 1 is housed in a motor seat 5 whose function is to support electric motor 1 when in operation. In particular, in fan convectors, motor seat 5 is connected to a trough 22 (Figure 2) for the collection of condensation in a manner which is in itself known and which is not therefore further described.

The description provided below refers to application of the method according to this invention to the mounting of rotor 20 on electric motor 1, with particular reference to the situation of an automated line in which a robot 30 designed to carry out a plurality of operations is present.

It is assumed that robot 30, electric motor 1, rotor 20 and, preferably, also motor seat 5 are present at a work station 41 (Figure 2) in an automated production line (not shown in the figures). Work station 41 is therefore engaged in assembling electric motor 1 with rotor 20 and, preferably, also fitting electric motor 1 into motor seat 5.

The operation of fitting electric motor 1 into motor seat 5 is advantageously performed after rotor 20 has been assembled with electric motor 1.

Alternatively this operation may also be performed first, without however invalidating proper application of the method according to this invention.

Work station 41 has an operating unit 31 in which a number of operations which enable robot 30 to correctly assemble electric motor 1 and rotor 20 are carried out.

Work station 31 comprises,supporting means 32 and 33 capable of supporting electric motor 1.

According to a particularly advantageous embodiment of the method according to this invention, electric motor 1 is supported by drive shaft 3. Alternatively, electric motor 1 may be supported by supporting structure 2, or the structure of the stator.

Electric motor 1 and rotor 20 may be housed on a pallet 36 designed to transport pieces along the automated line which have to be worked on at the various operating units. Advantageously, motor seat 5 is also housed on pallet 36 and has already been previously assembled to collection trough 22.

Alternatively, electric motor 1, rotor 20, motor seat 5 and collection trough 22 are located close to operating unit 31, for example in a materials storage area 21.

Robot 30 seizes electric motor 1 through grasping means 34 and sets it down on support means 32 and 33.

According to a preferred embodiment support means 32 and 33 take the form of a pair of supports having a terminal portion of a "U" or "V" shape capable of receiving drive shaft 3 of electric motor 1.

Electric motor 1 is thus supported by supports 32 and 33 through drive shaft 3.

Grasping means 34 are preferably but not necessarily a pair of tongs which each grasp drive shaft 3 on opposite sides with respect to loadbearing structure 2 of electric motor 1.

Rotor 20 comprises coupling means 38 capable of receiving a portion of drive shaft 3 of electric motor 1 for the purpose of assembling electric motor 1 with rotor 20. Coupling means 38 extend along axis of rotation X-X and, according to a preferred embodiment, take the form of a hub of rotor 20.

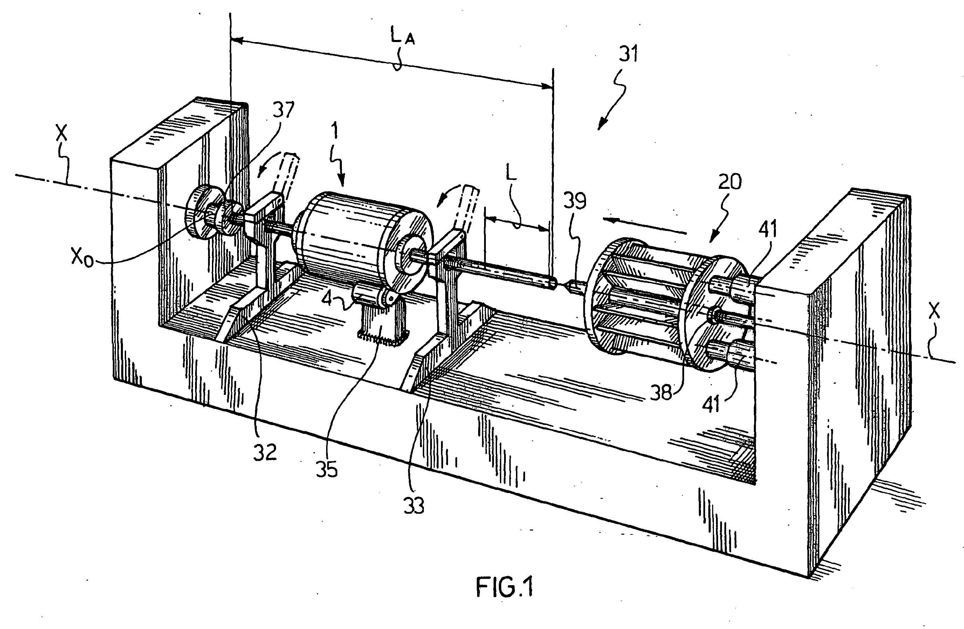

Advantageously it may be useful to know the angular position of electric motor 1 with respect to axis of rotation X-X in order to place electric motor 1 in a correct position in motor seat 5. Angular stop means 35 which take the form, for example, of a stop (Figure 1) against which, for example, condenser 4 abuts, may be used for this purpose.

This proves particularly advantageous in that stop 35 is in a position known to robot 30, as is the position of condenser 4, as a result of which the angular position of electric motor 1 about axis of rotation X-X becomes known.

The method of assembling electric motor 1 with rotor 20, carried out on only one part of motor shaft 3 is described below, as the method for assembling a rotor on the opposite part of drive shaft 3 will obviously be equivalent.

In particular rotor 20 is secured onto drive shaft 3.

Electric motor 1 is located in operating unit 31 supported by supports 32 and 33 with condenser 4 abutting against angular stop 35.

In order to be able to proceed with assembling rotor 20 with electric motor 1 it is necessary to know the linear position of electric motor 1 or drive shaft 3 along the axis X-X. It is necessary to know this position because of the fact that the method according to this invention can be applied to different electric motors which may have drive shafts having different longitudinal dimensions. As a consequence the final position of rotor 20 will vary according to the longitudinal dimension of the drive shaft. In other words, it is necessary to see where rotor 20 must be secured to drive shaft 3.

For this purpose drive shaft 3 is pushed axially, for example by robot 30, in the direction of the axis of rotation (X-X) until it abuts against an axial stop 37 located at a predetermined axial coordinate X₀ along axis of rotation X-X. In this way the linear position of electric motor 1 or drive shaft 3 along axis of rotation X-X becomes known.

Subsequently supports 32 and 33 lock the drive shaft 3 axially, immobilising the drive shaft along axis of rotation X-X. This operation is performed for example by locking means fixed to the ends of supports 32 and 33 (Figure 1) and is necessary to prevent damage to the rotor of the electric motor during the subsequent securing stage.

Rotor 20 is supported and guided in alignment with drive shaft 3 by an auxiliary shaft 39 which extends along axis of rotation X-X, that is perfectly coaxially with drive shaft 3.

Rotor 20 is thrust axially through two thrust members 41 along the direction of axis of relation X-X towards drive shaft 3 over a predetermined securing length L of drive shaft 3 so as to secure hub 38 of rotor 20 on drive shaft 3 through an interference fit.

Securing length L depends on the predetermined axial coordinate X₀ and the length L_{A} ,of drive shaft 3.

In the example in Figure 1, length L_{A} corresponds to the length of drive shaft 3 from one end to the other. If the method is applied to an electric motor 1 having a drive shaft 3 which projects from only one head end of electric motor 1, length L_{A} may be identified differently.

Thrust members 41 produce, for example, a thrust of 30 Kg in order to effect correct securing.

In order to assemble a rotor onto the opposite part of the drive shaft it is possible to proceed in different ways when applying the method according to this invention.

For example robot 30 may lift the assembled motor/rotor unit, rotate it through 180° with respect to axis of rotation X-X and replace it on supports 32, 33 so that a second rotor can be securing onto shaft 3.

Alternatively, a different arrangement of axial stop 37 may be provided so that two rotors can be inserted onto the two parts of drive shaft 3 projecting from electric motor 1.

Once electric motor 1 has been assembled with rotor 20, robot 30 locates the unit of electric motor 1/rotor 20 in motor seat 5.

Electric motor 1 can be housed in motor seat 5 in different ways.

According to a preferred embodiment, electric motor 1 is lifted from supports 32 and 33 by robot 30 and is transferred to motor seat 5, previously assembled with collection trough 22 housed on pallet 36.

Finally, electric motor 1 is stably secured to motor seat 5 through the application of two piano wire steel springs 13. Springs 13 are taken from a magazine through two applicator members which are suitably modelled to the elastic shape of springs 13 which press springs 13 against portions 11 and 12 of electric motor 1. The springs pushed in this way make a snap connection with two ratchet members 14 provided in motor seat 5.

As will be seen from what has been described, the method for assembling a rotor and an electric motor according to this invention makes it possible to satisfy the requirements and overcome the disadvantages mentioned in the introductory part to this description with reference to the known art.

The advantages deriving from use of the method according to this invention lie mainly in the fact that it assists automation of assembly of the rotor with the electric motor. In addition to this the lack of additional components which would make the masses involved asymmetrical makes it possible to achieve better dynamic balancing of the motor/rotor unit.

## Claims

1. A method for mounting the rotor (20) of a fan on the drive shaft (3) of an electric motor (1), the said electric motor (1) comprising a drive shaft (3) projecting from the said motor along a longitudinal axis of rotation (X-X), the said rotor (20) comprising coupling means (38) capable of receiving a portion of the said drive shaft (3) and extending along the said axis of rotation (X-X), the said method comprising the stages of:
- supporting the said motor (1) and the said rotor (20),
- pushing the said drive shaft (3) axially in the direction of the axis of rotation (X-X) until it abuts against an axial stop (37), the said axial stop (37) being located at a predetermined axial coordinate (X₀) along the axis of rotation (X-X),
- axially immobilising the said drive shaft (3),
- pushing the said rotor (20) in the direction of the axis of rotation (X-X) over a predetermined securing length (L) of the drive shaft (3) such as to secure the said rotor (20) on the drive shaft (3) through an interference fit, the said predetermined securing length (L) depending on the said predetermined axial coordinate (X₀) and the length (L_{A}) of the drive shaft (3).

2. A method for mounting the rotor (20) of a fan in accordance with claim 1, wherein the said drive shaft (3) projects from both the head ends of the said motor along the said longitudinal axis of rotation (X-X).

3. A method for mounting the rotor (20) of a fan in accordance with claim 1 or 2, wherein the said coupling means (38) are constituted of a hub of the rotor (20).

4. A motor-fan unit assembled in accordance with the method of claims 1 to 3.

## Patentansprüche

1. Verfahren zur Befestigung des Rotors (20) eines Lüfters an der Antriebswelle (3) eines Elektromotors (1), wobei der Elektromotor (1) eine Antriebswelle (3) enthält, die vom Motor in einer Rotationsachse in Längsrichtung (X-X) herausragt, wobei der Rotor (20) ein Koppelungsmittel (38) enthält, das einen Teil der AntriebsWelle (3) aufnehmen kann und sich entlang der Rotationsachse (X-X) erstreckt, wobei das Verfahren die Schritte umfasst:
- Lagern von Motor (1) und Rotor (20),
- Verschieben der Antriebswelle (3) axial in Richtung der Rotationsachse (X-X), bis sie gegen einen axialen Anschlag (37) anstößt wobei sich der axiale Anschlag (37) an einer bestimmten axialen Koordinate (X₀) an der Rotationsachse (X-X) befindet,
- axiales Blockieren der Antriebswelle (3),
- Verschieben des Rotors (20) in Richtung der Rotationsachse (X-X) über eine vorab festgelegte Befestigungslänge (L) der Antriebswelle (3) dergestalt, dass der Rotor (20) an der Antriebswelle (3) durch eine Presspassung befestigt ist, wobei die bestimmte Bofestigungslänge (L) von der bestimmten, Achsenkoordinaten (X₀) und der Länge (L_{A}) der Antriebswelle (3) bestimmt wird.

2. Verfahren zum Befestigen des Rotors (20) eines Lüfters gemäß Anspruch 1, wobei die Antriebswelle (3) aus den beiden Kopfenden des Motors entlang der Rotationsachse in Längsrichtung (X-X) herausragt.

3. Verfahren zum Befestigen des Rotors (20) eines Lüfters gemäß Anspruch 1 oder 2, wobei die Koppelungsmittel (38) von einer Nabe des Rotors (20) gebildet werden.

4. Motorlüftereinheit, die gemäß dem Verfahren der Ansprüche 1 bis 3 zusammengebaut wurde.

## Revendications

1. Procédé destiné à monter le rotor (20) d'un ventilateur sur l'arbre d'entraînement (3) d'un moteur électrique (1), ledit moteur électrique (1) comprenant un arbre d'entraînement (3) saillant depuis ledit moteur le long d'un axe de rotation longitudinal (X-X), ledit rotor (20) comprenant des moyens de couplage (38) capables de recevoir une partie dudit arbre d'entraînement (3) et s'étendant le long dudit axe de rotation (X-X), ledit procédé comprenant les étapes consistant à :
- supporter ledit moteur (1) et ledit rotor (20) ;
- pousser ledit arbre d'entraînement (3) axialement dans la direction de l'axe de rotation (X-X) jusqu'à ce qu'il soit en butée contre une butée axiale (37), ladite butée axiale (37) étant située à une coordonnée (X₀) axiale prédéterminée le long de l'axe de rotation (X-X);
- immobiliser axialement ledit arbre d'entraînement (3);
- pousser ledit rotor (20) dans la direction de l'axe de rotation (X-X) sur une longueur (L) de fixation prédéterminée de l'arbre d'entraînement (3) de façon à fixer ledit rotor (20) sur l'arbre d'entraînement (3) par un ajustement avec serrage, ladite longueur (L) de fixation prédéterminée dépendant de ladite coordonnée (X₀) axiale prédéterminée et de la longueur (L_{A}) de l'arbre d'entraînement (3).

2. Procédé destiné à monter le rotor (20) d'un ventilateur selon la revendication 1, dans lequel ledit arbre d'entraînement (3) est saillant depuis les deux extrémités de tête de culasse dudit moteur le long dudit axe de rotation longitudinal (X-X).

3. Procédé destiné à monter le rotor (20) d'un ventilateur selon la revendication 1 ou 2, dans lequel lesdits moyens de couplage (38) sont constitués d'un moyeu du rotor (20).

4. Unité de ventilateur de moteur montée selon le procédé des revendications 1 à 3.
